# EUROPÄISCHE PATENTSCHRIFT

(11) **EP 3 097 665 B1**
(45) Veröffentlichungstag und Bekanntmachung des Hinweises auf die Patenterteilung: **23.01.2019**
(21) Anmeldenummer: 15709621.5
(22) Anmeldetag: 23.01.2015
(51) Int. Cl.: H04L 12/40, H04L 12/28, H04L 29/12, H04L 12/24

(54) **BUSSYSTEM SOWIE VERFAHREN ZUM BETREIBEN EINES BUSSYSTEMS**
BUS SYSTEM, AND METHOD FOR OPERATING A BUS SYSTEM
SYSTÈME DE BUS, ET PROCÉDÉ POUR FAIRE FONCTIONNER UN SYSTÈME DE BUS

(30) Priorität: 23.01.2014 DE 102014100768; 20.10.2014 DE 102014115222
(43) Veröffentlichungstag der Anmeldung: 30.11.2016
(73) Patentinhaber: Firma Lingg & Janke OHG, 78315 Radolfzell (DE)
(72) Erfinder: JANKE, Peter, 78166 Donaueschingen (DE)
(74) Vertreter: Patentanwälte und Rechtsanwalt Weiß, Arat & Partner mbB
(86) Internationale Anmeldenummer: PCT/EP2015/051375
(87) Internationale Veröffentlichungsnummer: WO 2015/110588

(56) Entgegenhaltungen:
- EP-A2- 0 833 426
- "Applikationsbeschreibung KNX-GW-DMX DMX-Gateway", , 19. Juni 2012 (2012-06-19), XP055204274, Rigaer Str. 88 , 10247 Berlin Gefunden im Internet: URL:http://www.arcus-eds.de/fileadmin/arcu s/Doku/40_Doku_GW/4200_d3_KNX-GW-DMX.pdf [gefunden am 2015-07-23]

## Beschreibung

Die vorliegende Erfindung betrifft ein Bussystem sowie ein Verfahren zum Betreiben eines Bussystems gemäss den Oberbegriffen der unabhängigen Ansprüche.

### STAND DER TECHNIK

Elektrische Anlagen finden Verwendung in nahezu sämtlichen Gebäuden, seien es Wohn-, Fabrik-, und Bürogebäude oder aber Krankenhäuser, Verwaltungsgebäude und dergleichen.

Eine Überwachung, Steuerung, Regelung und auch Optimierung von elektrischen Anlagen eines Gebäudes mit speziell dafür vorgesehenen Einrichtungen wird als Gebäudesystemtechnik oder Gebäudeautomation bezeichnet. Ziel der Gebäudesystemtechnik ist es, eine Nutzung des Gebäudes und insbesondere eine Bedienung und Überwachung der vorhandenen elektrischen Anlagen zu vereinfachen, indem deren Funktionsabläufe automatisiert werden. Hierzu werden elektrische Anlagen eines Gebäudes vernetzt, wobei dies vorzugsweise mittels eines Bussystems geschieht. Bussysteme dienen der Übertragung von Daten zwischen mehreren Teilnehmern. Hierbei nutzen die Teilnehmer in der Regel eine gemeinsame Leitung bzw. einen gemeinsamen Übertragungsweg und das gleiche Übertragungsverfahren. Kennzeichnend für Bussysteme ist ein einfacher Datenaustausch und eine dezentrale Organisation. Bei Bedarf können jedoch zentrale Geräte, beispielsweise Steuerungsgeräte, zum Bussystem hinzugefügt werden. Bussysteme sind zentral organisierten Systemen, bei der sämtliche Verbindungen zwischen den Teilnehmern beispielsweise eine zentral angeordnete Datenverarbeitungseinrichtung passieren, auf Grund ihrer Einfachheit und Ausfallsicherheit oft überlegen. Fällt ein Gerät in einem Bussystem aus, so sind nur dessen Funktionen betroffen bzw. gestört, während die Funktionen der anderen Teilnehmer bzw. Geräte nicht beeinflusst ist.

Bussysteme werden in der Gebäudeinstallation und bei der Gebäudeautomation oder Gebäudesteuerung bzw. Gebäudesystemtechnik seit längerem verwendet. Dabei hat sich der KNX-Standard europaweit und weltweit besonders durchgesetzt.

Aus dem Stand der Technik sind zahlreiche KNX-Bussysteme bekannt. So ist beispielsweise ein KNX-DMX-Gateway der Firma Arcus-EDS GmbH bekannt, welcher in der "Applikationsbeschreibung KNX-GW-DMX DMX-Gateway" beschrieben ist.

Die Applikationsbeschreibung offenbart einen KNX-DMX Gateway mit einem Drehschalter S1. Die Gruppenadresse wird beim Einschalten der DC-Spannung im KNX-DMX Gateway mit Schalter S1 kodiert.

Ferner ist ein Bussystem aus der EP 0 833 426 A2 bekannt. Diese offenbart die Verwendung von Wippschaltern als Kodierschalter in einem Bussystem.

Gemäss dem KNX-Standard sind im Gebäude für eine Gerätesteuerung und für eine Stromversorgung zwei voneinander getrennte Netze vorgesehen. Die Stromversorgung der Verbraucher, beispielsweise einer Deckenleuchte, eines Rollladens, einer Gartenbewässerungsanlage und dergleichen, erfolgt über ein Stromnetz. Demgegenüber erfolgt die Gerätesteuerung, also beispielsweise ein Ein- bzw. Ausschalten der Deckenleuchte oder der Gartenbewässerungsanlage durch ein Steuerungsnetz. Das Steuerungsnetz wird auch als KNX-Bus bezeichnet.

An einen KNX-Bus angeschlossene Busgeräte oder Busteilnehmer werden unterschieden in Sensoren und Aktoren.

Hierbei sind Sensoren KNX-Geräte, die Informationen aus der Umwelt bzw. dem Gebäude entgegennehmen und auf den KNX-Bus senden, beispielsweise Taster, Dimmtaster, Bewegungsmelder, Fenster- oder Türkontakte, Klingeltaster, Überspannungssensoren, Windsensoren, Schalter, Temperaturfühler, Energiezähler, Helligkeitssensoren, CO₂-Konzentrationssensoren oder Feuchtigkeitssensoren.

Aktoren, teilweise auch als Stellglieder bzw. Steuerungsgeräte bezeichnet, sind KNX Geräte, die Informationen vom KNX-Bus entgegennehmen und in die Umwelt abgeben bzw. in Aktionen im Gebäude umwandeln. Hierzu sind Aktoren in der Regel zwischen den Verbraucher, der an den KNX-Bus angeschlossen ist, und das Stromnetz geschaltet. Auf einen vom Sensor ausgehenden entsprechenden Befehl hin schaltet der Aktor die Netzspannung an den Verbraucher durch. Aufzuführen als Aktoren sind hier beispielsweise die Aktoren zum Schalten von Licht wie bspw. Relais, Dimmer, Heizkörperventile und andere Aktoren zur Temperaturregelung, Antriebe für Markisen, Jalousien, Vorhänge und dergleichen, Ventilsteuerungen für Solaranlagen, Aktoren für die Schaltung von Klimaanlagen, Lüftungsanlagen, Unterhaltungselektronik, Telefonanlagen, Türöffner, Energieverbrauchsanzeiger, Informationsdisplays, Fensterantriebe und dergleichen.

Damit z.B. eine Deckenlampe eingeschaltet werden kann, werden ein Tastsensor und ein Schaltaktor eingesetzt. Drückt ein Benutzer eine Taste des Tastsensors, so wird über den Tastsensor die Schaltinformation auf den KNX-Bus gesendet. Der Schaltaktor nimmt die Information entgegen und schaltet das Licht ein oder aus.

Damit der Aktor, beispielsweise ein Schaltaktor einer Deckenlampe, mit dem Sensor, beispielsweise einen Tastsensor zum Schalten einer Deckenlampe, kommunizieren kann, müssen beide KNX-Geräte aufeinander abgestimmt bzw. miteinander verbunden werden. Gemäss dem Stand der Technik geschieht dies mit der Software ETS (Engineering Tool Software).

In der ETS werden die KNX-Busgeräte virtuell zusammengestellt und miteinander verbunden. Nach Fertigstellung eines Projektes werden die erstellten Daten in die Busteilnehmer heruntergeladen. Erst jetzt sind die Busteilnehmer funktionsbereit.

Der beschriebene Aufwand, die Bus-Teilnehmer mittels der Software ETS betriebsbereit zu machen und das gesamte System in Betrieb zu nehmen ist insbesondere für kleine Busanlagen recht hoch und stellt somit eine nicht zu unterschätzende Hürde dar, den KNX-Bus in einem kleineren Gebäude mit wenigen Teilnehmern einzusetzen oder einen in dem kleinen Gebäude bereits vorhandenen KNX-Bus umzuprogrammieren.

### AUFGABE

Die Aufgabe der vorliegenden Erfindung ist es, die Nachteile des Standes der Technik zu überwinden. Insbesondere soll eine Vorrichtung bereitgestellt werden, die die Inbetriebnahme eines Bussystems einfacher und flexibler gestaltet.

### LÖSUNG DER AUFGABE

Zur Lösung der Aufgabe führen die Merkmale der unabhängigen Ansprüche.

Gemäss einem Ausführungsbeispiel sind einige oder sämtliche Busteilnehmer eines Bussystems mit einem Codierschalter ausgestattet. Der Codierschalter ist bevorzugt manuell bedienbar. Hierbei kann beispielsweise an DrehCodierschalter gedacht sein.

Der Codierschalter dient vorzugsweise der Programmierung des Busteilnehmers, wobei unter Programmierung die Vornahme sämtlicher Einstellungen verstanden werden kann, mittels welche der Busteilnehmer an den Bus und somit an das Bussystem umfassend weitere Teilnehmer angeschlossen werden kann. Im Wesentlichen umfasst der Vorgang der Programmierung somit ein Herstellen einer Verbindung zwischen zumindest zwei Busteilnehmern.

Besonders bevorzugt ist hierbei, mittels des Codierschalters die Verbindungsnummer des Busteilnehmers einstellen zu können. Busteilnehmer, beispielsweise ein Sensor und ein korrespondierender Aktor, kommunizieren nur dann miteinander, wenn ihre Verbindungsnummern übereinstimmen. Hierbei soll einerseits eine Einstellung bzw. Position des Codierschalters wählbar sein, welche die Programmierung des Teilnehmers bzw. die Einstellung der Verbindungsnummer mittels einer geeigneten Software, beispielsweise der ETS-Software erlaubt. Andererseits soll auch zumindest eine weitere Einstellung bzw. Position des Codierschalters wählbar sein, bei welcher die Verbindungsnummer direkt durch die Einstellung bzw. Position des Codierschalters vorgegeben ist. Das heisst durch die vorliegende Erfindung wird dem Anwender ein "duales" System zum Einstellen zur Verfügung gestellt, bei dem die Einstellung sowohl manuell über den Codierschalter, als auch über eine geeignete Software erfolgen kann.

Besonders vorteilhaft an einer manuellen Einstellung der Verbindungsnummer über Drehcodierschalter oder dergleichen ist, dass auch ein kleines KNX-Bus-System mit nur wenigen Teilnehmern, beispielsweise in einem kleinen Einfamilienhaus, einfach programmiert und umprogrammiert werden kann. Eine solche Programmierung bzw. Umprogrammierung ist gemäss der vorliegenden Erfindung manuell ohne Software möglich.

Die vorliegende Erfindung kommt insbesondere in KNX-Bus-Systemen zum Einsatz, soll darauf jedoch nicht begrenzt sein, sondern auch auf andere Feldbusse übertragen werden können.

Busteilnehmer bzw. KNX-Teilnehmer im Rahmen der vorliegenden Erfindung sollen sämtliche bekannten Sensoren und Aktoren umfassen.

Codierschalter im Rahmen der vorliegenden Erfindung sind sämtliche Arten von Codierschaltern, sowohl Drehcodierschalter als beispielsweise auch mit Tastern ausgestattete Codierschalter. Weiterhin kann an Hexadezimal- und Dezimal sowie an Binär-Codierschalter (DIL-Schalter, Dual-In-Line-Schalter) gedacht sein.

Eine Verbindung ist im Rahmen der vorliegenden Erfindung vorzugsweise ein virtueller Verbindungskanal, über welchen zumindest zwei Busteilnehmer über den Bus verbunden sind. Vorzugsweise ist eine solche Verbindung dadurch charakterisiert, dass die Busteilnehmer bezüglich einer Verbindungsklasse und einer Verbindungsnummer übereinstimmen. Verbindungsklasse und Verbindungsnummer werden zusammengefasst und bilden Gruppenadressen. Zwei Busteilnehmer können also miteinander in Verbindung treten, wenn ihre Gruppenadressen übereinstimmen. Gemäss einem Ausführungsbeispiel umfasst die Verbindungsnummer hierbei eine Gruppennummer und eine Kanalnummer und ist somit zumindest zweistellig. Einem Ausführungsbeispiel gemäss kann die Kanalnummer eines Busteilnehmers auf "0" gestellt werden. Hierdurch werden alle Kanäle der entsprechend gewählten Gruppennummer angesprochen. Ein Sensor, bei welchem die Kanalnummer auf "0" gestellt wurde, tritt mit sämtlichen Aktoren in Verbindung, welche mit ihm bezüglich Verbindungsklasse und Gruppennummer übereinstimmen, die Kanalnummer der Aktoren spielt dann keine Rolle.

Verbindungsnummern im Rahmen der vorliegenden Erfindung können zweistellig oder mehrstellig sein. Verbindungsnummern können ferner Dezimal, d.h. 00 ... 99 (BCD codiert), oder Hexadezimal, d.h. $00 ... $FF, oder eine Mischform aus dezimalen und hexadezimalen Ziffern sein. Dabei ist eine dezimale Darstellung eine Untermenge einer hexadezimalen Darstellung.

In einer Ausführungsform mit dezimalen Verbindungsnummern ist dabei beispielsweise die Verbindungsnummer "00" dafür vorgesehen, den Codierschalter bzw. eine Vielzahl von Codierschaltern, bei denen die Verbindungsnummer "00" eingestellt ist, mittels Software, bspw. ETS, zu programmieren. Dadurch kann in diesem Fall dem Sensor oder Aktor, der über den Codierschalter auch manuell eingestellt werden könnte, über die ETS eine beliebige Kanal- und/oder Gruppennummer zugewiesen werden.

Verbindungsklassen im Rahmen der vorliegenden Erfindung sind beispielsweise Schalten (AUS-AUS oder EIN-AUS), Dimmen (EIN-AUS und HELLER-DUNKLER) oder Jalousie (AUF-AB und Lamelle AUF-AB), Werte (Temperatur, Helligkeit etc.), Temperaturregelung, Zähler und dergleichen.

Gemäss einem Ausführungsbeispiel verfügen Aktoren über zumindest zwei einstellbare Gruppennummern. Es kann sowohl daran gedacht sein, für den gesamten Aktor nur zwei einstellbare Gruppennummern vorzusehen, als auch für verschiedene Aktorkanäle jeweils einstellbare Gruppennummern vorzusehen.

Während die Gruppenadresse bestehend aus Verbindungsklasse und Verbindungsnummer bestimmt, ob Bus-Teilnehmer miteinander in Verbindung treten, so dienen sogenannte Kommunikationsobjekte dazu, die Information eines Sensors über den Bus zu einem hinsichtlich der Gruppenadresse übereinstimmenden Aktor zu transportieren und den Aktor die gewünschte Aktion ausführen zu lassen. Kommunikationsobjekte, auch Datenpunkte genannt, sind Speicherstellen im Busteilnehmer. Kommunikationsobjekte sind hierbei den Gruppenadressen zugeordnet. Abhängig von ihrer Funktion können Kommunikationsobjekte unterschiedlich gross bzw. lang sein. So genügt für die Funktion "Schalten" eine Grösse des zugehörigen Kommunikationsobjektes von 1 bit, da beim Schalten nur die beiden Zustände "ein" und "aus" relevant sind. Je komplexer die Funktion, desto grösser das zugehörige Kommunikationsobjekt. Die Grösse eines Kommunikationsobjekts wird hierbei auch als Datenpunkttyp (DPT) bezeichnet. Datenpunkttypen sind standardisiert und haben Werte wie z.B. 1Bit, 4Bit, 1Byte, 2Byte, 4Byte usw. Auch bestimmte Einheiten oder Funktionen können mit Datenpunkttypen verbunden bzw. ihnen zugeordnet sein. Der vorstehend erwähnte Datenpunkttyp 1Bit kann z.B. ausser mit der Funktion SCHALTEN auch mit der Funktion Jalousie AUF-AB verbunden sein, usw.

Damit Bus-Teilnehmer miteinander kommunizieren können, müssen sie einerseits hinsichtlich ihrer Gruppenadressen und andererseits hinsichtlich der zugeordneten Kommunikationsobjekte bzw. Datenpunkte sowie des jeweiligen Datenpunkttyps übereinstimmen. Ein Sensor übermittelt die Information, dass ein Aktor eine bestimmt Aktion ausführen soll, mit Hilfe sogenannter Telegramme, welche wiederum basierend auf dem Kommunikationsobjekt des Sensors das Kommunikationsobjekt des Aktors aktualisiert.

Zunächst erkennt der Sensor eine Zustandsänderung, beispielsweise erfassen ein Helligkeitssensor oder ein Temperatursensor o. dgl. eine Veränderung von Helligkeit oder Temperatur. Weiterhin kann auch ein Tastsensor das Umlegen des Tasters durch einen Bediener erfassen. Hierbei wird der Datenpunkt bzw. das Kommunikationsobjekt des Sensors verändert. Bei einem Tastsensor ändert sich beispielsweise in der Regel der zugehörige Datenpunkt mit der Funktion "Schalten", der nur ein bit umfasst, von "0" auf "1" oder umgekehrt. Ist der Sensor komplexer aufgebaut als der Tastsensor, sind andere Datenpunkttypen und mehrere Datenpunkte vorgesehen und auch die Zustandsänderung des Datenpunkts bzw. Kommunikationsobjekts fällt komplizierter aus, weil sich beispielsweise mehrere bits in mehreren Kommunikationsobjekten ändern. So sind der Verbindungsklasse "Dimmen" oftmals drei Datenpunkte zugeordnet, wobei der erste Datenpunkt mit der Grösse von 1 bit die Information "Ein-Aus" verarbeitet, der zweite Datenpunkt mit 4 bit für "heller-dunkler" zuständig ist und der dritte Datenpunkt mit 1 Byte festgelegte Dimmwerte erfasst.

Sobald eine derartige Zustandsänderung vom Sensor erfasst wurde, sendet dieser ein Telegramm auf den KNX-Bus, welches die Gruppenadresse sowie das Kommunikationsobjekt enthält. Durch die Gruppenadresse sind geeignete Aktoren als Empfänger bereits festgelegt. Stimmt weiterhin der zur Gruppenadresse des Aktors zugehörige Datenpunkttyp mit demjenigen des Sensors und somit ebenfalls mit demjenigen im Telegramm überein, so ändert der Aktor seinen Datenpunkt bzw. sein Kommunikationsobjekt entsprechend der Vorgabe im Telegramm. Der Aktor gleicht sein Kommunikationsobjekt also an dasjenige des Sensors an. Hierdurch wird beispielsweise bewirkt, dass von einem Schaltaktor eine Deckenleuchte eingeschaltet wird.

Somit ermöglicht der KNX-Bus letztlich die Änderung von Datenpunkten bzw. Kommunikationsobjekten im Aktor auf Befehl des Sensors.

Es kann vorgesehen sein, einer Verbindungsklasse mehrere Datenpunkte zuzuordnen. Dies ist beispielsweise bei der Verbindungsklasse "Dimmen" der Fall. Die Verbindungsklasse "Dimmen" besteht hierbei beispielsweise aus einem Verbindungstyp und einem Datenpunktselektor.

Die Gruppenadressen der KNX-Geräte bzw. Bus-Teilnehmer gemäss der vorliegenden Erfindung werden vorzugsweise nicht mit der ETS (Engineering Tool Software), sondern manuell eingestellt. Hierfür müssen die zur manuellen Einstellung vorgesehenen Codierschalter die Funktion der ETS übernehmen. Die ETS hat im Wesentlichen zur Aufgabe, drei Tabellen zu erstellen und in den jeweiligen Bus-Teilnehmer bzw. das jeweilige KNX-Gerät zu laden. Ausserdem werden von der ETS auch Anwendungs-Software und etwaige andere Geräteparameter hochgeladen bzw. bearbeitet.

Bei den drei Tabellen handelt es sich um die Gruppenadressen-Tabelle, die Zuordnungs-Tabelle und die Tabelle der Kommunikationsobjekte bzw. Datenpunkte (Datenpunkt-Tabelle). Die Zuordnungs-Tabelle ist eine Hilfstabelle und dient der Zuordnung von Gruppenadressen zu den jeweiligen Kommunikationsobjekten bzw. Datenpunkten.

Vorzugsweise ist gemäss der vorliegenden Erfindung vorgesehen, die vorstehend beschriebene Funktion der ETS zu ersetzen, indem die Tabellen bereits im KNX-Gerät gespeichert sind und über die Codierschalter nur noch ausgewählt werden. Hierbei kann auch vorgesehen sein, einen Teil der Gruppenadresse bereits im KNX-Gerät voreinzustellen, so dass nur ein anderer Teil durch Codierschalter eingestellt wird. In solch einem Fall muss beispielsweise nur die Gruppenadressen-Tabelle oder nur die Datenpunkt-Tabelle mit Hilfe des Codierschalters eingestellt werden. Die Tabellen können hierbei jeweils im Speicher des KNX-Geräts vorgefertigt abgelegt sein, oder aber jeweils bei Bedarf vom KNX-Gerät berechnet werden. Auch eine Mischform ist denkbar, wobei ein Teil der Tabellen vorgefertigt abgelegt ist und ein anderer Teil vom KNX-Gerät bei Bedarf berechnet wird. Alle Tabellen sind vorzugsweise jeweils auf das KNX-Gerät zugeschnitten.

Codierschalter dienen somit der Auswahl vorgefertiger virtueller KNX-Verbindungen zwischen KNX-Geräten bzw. Bus-Teilnehmern, wobei diese KNX-Verbindungen in Form der im KNX-Gerät abgelegten oder bei Bedarf vom KNX-Gerät berechneten Tabellen bereits vorangelegt bzw. vorbereitet sind. Der Bediener muss somit lediglich die passende Stellung des Codierschalters, beispielsweise mit einem Schraubendreher, auswählen.

Vorzugsweise wird nach der Auswahl der Tabellen mit Hilfe der Codierschalter am KNX-Gerät eine Programmiertaste gedrückt, um die gewählten Einstellungen zu bestätigen. Somit wird Fehleinstellungen vorgebeugt.

Gemäss einem Ausführungsbeispiel kann daran gedacht sein, Sensoren für mehrere Verbindungsklassen vorzusehen bzw. Sensoren zu verwenden, welche für mehrere Verbindungsklassen geeignet sind. Auch der Einsatz der vorliegenden Erfindungen in anderen Bus-Systemen, wie beispielsweise einem LON-System (Local Operating Network) oder einem LCN-System (Local Control Network), ist für den Fachmann naheliegend und soll durch die vorliegende Erfindung umfasst sein.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine schematische Skizze eines KNX-Bus mit Bus-Teilnehmern,
Figur 2 eine schematische Skizze eines KNX-Bus mit verschiedenen Sensoren und einem Aktor,
Figur 3 eine schematische Zuordnung dreier Zweifach-Schaltsensoren zu einem Vierfach-Schaltaktor,
Figur 4 eine Ansicht nach Figur 3, jedoch mit teilweise anders gewählten Verbindungsnummern in den Sensoren,
Figur 5 eine Ansicht nach den Figuren 3 und 4, wobei im Vierfach-Schaltaktor die Kanalnummern vorgegeben sind,
Figur 6 eine Ansicht nach Figur 5 jedoch mit anderen Kanalnummern in den Sensoren,
Figur 7 eine Ansicht nach Figur 6, wobei jedoch nur noch eine Gruppennummer im Vierfach-Schaltaktor frei wählbar ist,
Figur 8 eine Ansicht nach Figur 7, jedoch mit teilweise anders gewählten Verbindungsnummern in den Sensoren,
Figur 9 eine Ansicht nach Figur 8, jedoch mit zwei Gruppennummern pro Aktorkanal,
Figur 10 eine Ansicht nach Figur 9, wobei jedoch sämtliche Gruppennummern sämtlicher Aktorkanäle frei wählbar sind und
Figur 11 eine Ansicht nach den Figuren 1 und 2, wobei ein Laptop 14 mit ETS angeschlossen ist,
Figur 12 zeigt eine erste und eine zweite Codierungsvariante für eine Gruppenadresse,
und die Figuren 13 und 14 zeigen Codierungsbeispiele nach der Codierungsvariante 1 für die Verbindungsklassen Schalten, Dimmen und Jalousie.

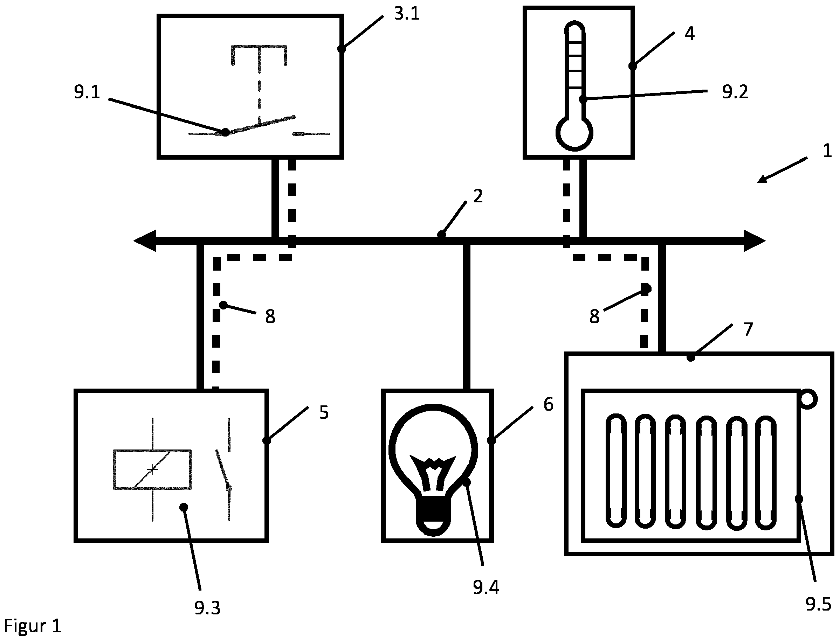

In Figur 1 ist ein KNX-Bus 2 mit Busteilnehmern 3, 4, 5, 6, 7 dargestellt. Zu erkennen sind zwei Sensoren, ein Schalt- bzw. Tastsensor 3 und ein Temperatursensor 4. Ferner sind ein Schaltaktor 5, ein Lampenschaltaktor 6 sowie ein Heizungsschaltaktor 7 dargestellt. Den Busteilnehmern 3, 4, 5, 6, 7 zugeordnete Verbindungsklassen sind angedeutet. Dargestellt sind die Verbindungsklassen "Schalten" 9.1, 9.3, "Heizen" 9.2, 9.5 sowie die Verbindungsklasse "Lampe schalten" 9.4. Ferner sind zwei über den KNX-Bus laufende virtuelle Verbindungskänale 8 zwischen Schalt- bzw. Tastsensor 3 und Schaltaktor 5 sowie zwischen Heiz-Sensor 4 und Heiz-Aktor 9.5 dargestellt.

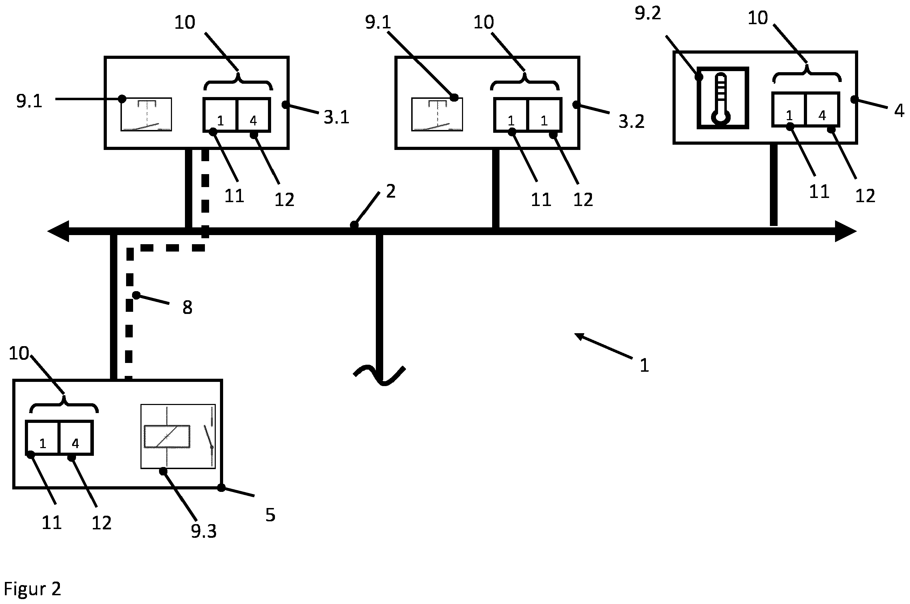

Figur 2 zeigt einen KNX-Bus 2 mit Busteilnehmern 3.1, 3.2, 4, 5. Jedem Busteilnehmer 3.1, 3.2, 4, 5 ist hierbei eine zweistellige Verbindungsnummer 10 zugeordnet. Diese ist wiederum unterteilt in Gruppennummer 11 und Kanalnummer 12.

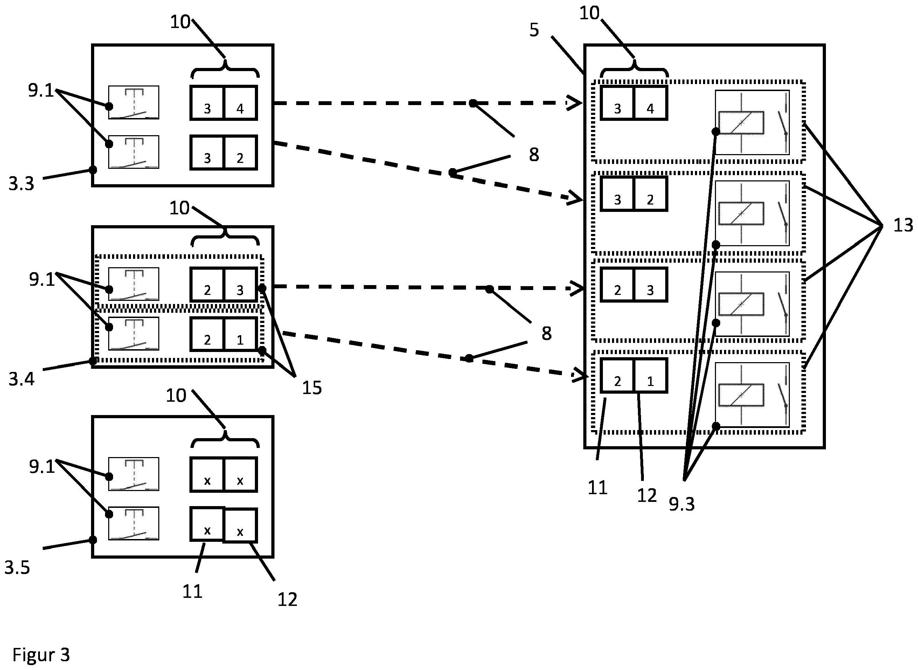

In Figur 3 ist die Zuordnung von drei Zweifach-Schaltsensoren 3.3, 3.4, 3.5 zu einem Vierfach-Schaltaktor 5 dargestellt. Jeder Schaltsensor 3.3, 3.4, 3.5 umfasst zwei Paare bestehend aus der Verbindungsklasse "Schalten" 9.1 und einer Verbindungsnummer 10. Einzeln schaltende Anordnungen umfassend eine Verbindungsnummer sowie eine Verbindungsklasse im Vierfach-Schaltaktor werden als Aktorkanal 13 bezeichnet. Analog sind in den Schaltsensoren Sensorkanäle 15 vorhanden, was beispielhaft für den Schaltsensor 3.4. gezeigt ist. Der Schaltaktor 5 umfasst vier Aktorkanäle 13 bestehend jeweils aus einer Verbindungsnummer 10 und der Verbindungsklasse "Schalten" 9.3. Zwischen den Schaltsensoren 3.3, 3.4 und den einzelnen Aktorkanälen des Schaltaktors 5 bestehen virtuelle Verbindungskanäle 8.

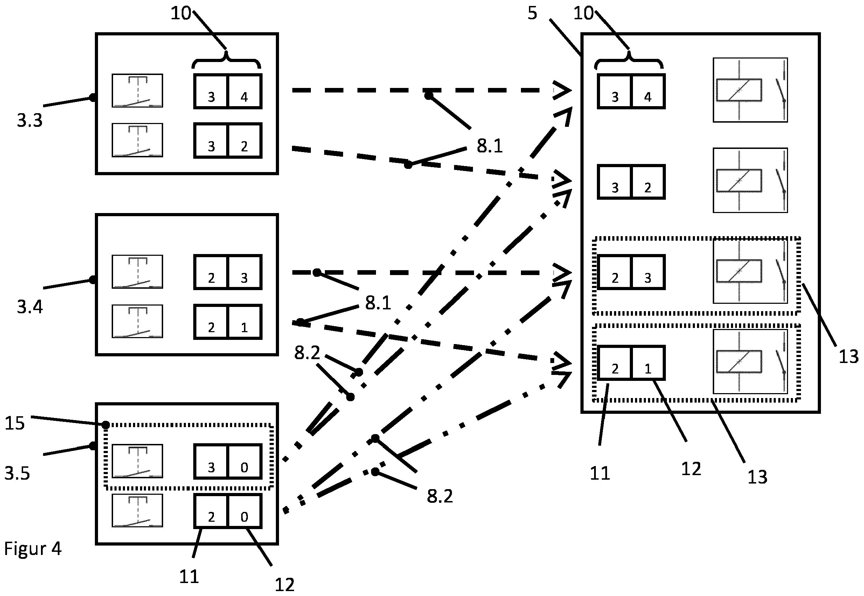

Figur 4 zeigt im Wesentlichen die gleiche Anordnung bzw. Konfiguration wie Figur 3, wobei neben den Verbindungsnummern 10 der Schaltsensoren 3.3, 3.4 die Verbindungsnummern 10 des Schaltsensors 3.5 ebenfalls eingestellt bzw. gewählt sind. Weiterhin bestehen neben jeweils zwei virtuellen Verbindungskanälen 8.1 der Schaltsensoren 3.3, 3.4 vier virtuelle Verbindungskanäle 8.2 zwischen dem Schaltsensor 3.5 und dem Schaltaktor 5.

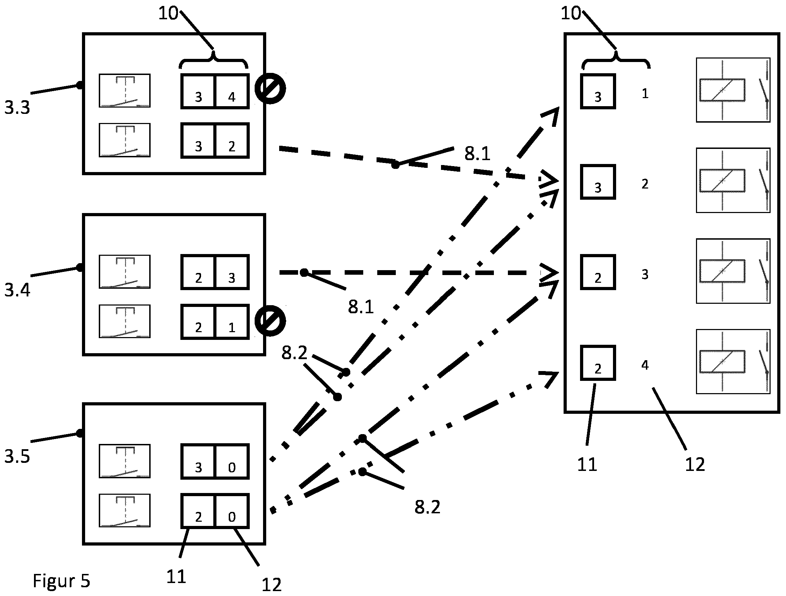

Figur 5 zeigt im Wesentlichen die gleiche Anordnung bzw. Konfiguration wie Figur 4, wobei die Kanalnummern 12 des Schaltsensors 3.5 voreingestellt sind und zwischen den Schaltsensoren 3.3, 3.4 und dem Schaltaktor 5 jeweils nur ein virtueller Verbindungskanal 8.1 besteht.

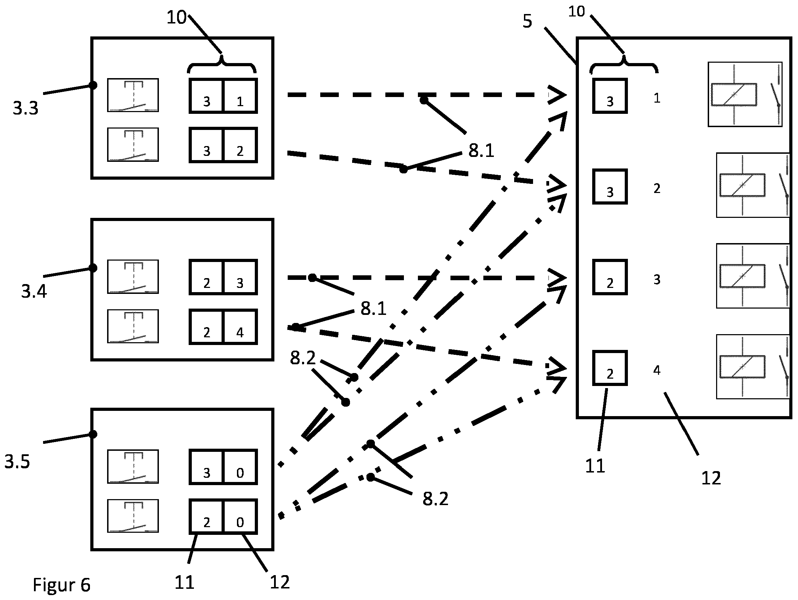

Figur 6 zeigt im Wesentlichen die gleiche Anordnung bzw. Konfiguration wie Figur 5. Die Kanalnummern 12 der Schaltsensoren 3.3, 3.4 sind jedoch gegenüber Figur 5 derart an die Kanalnummern 12 des Schaltaktors 5 angepasst, dass vier virtuelle Verbindungskanäle 8.1 zwischen den Zweifach-Schaltsensoren 3.3, 3.4 und dem Schaltaktor 5 vorliegen.

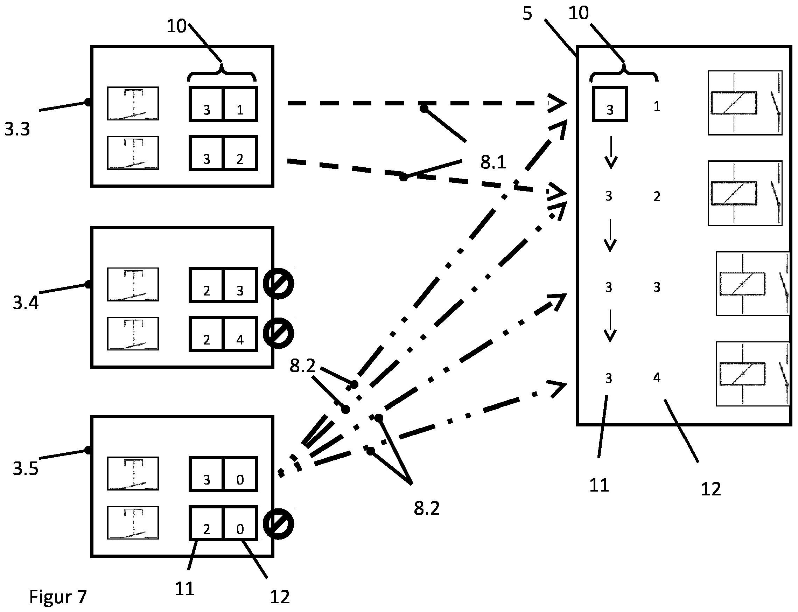

In Figur 7 ist im Wesentlichen die gleiche Anordnung bzw. Konfiguration wie in Figur 6 gezeigt, wobei nur noch eine Gruppennummer 11 für den gesamten Aktor 5 eingestellt ist.

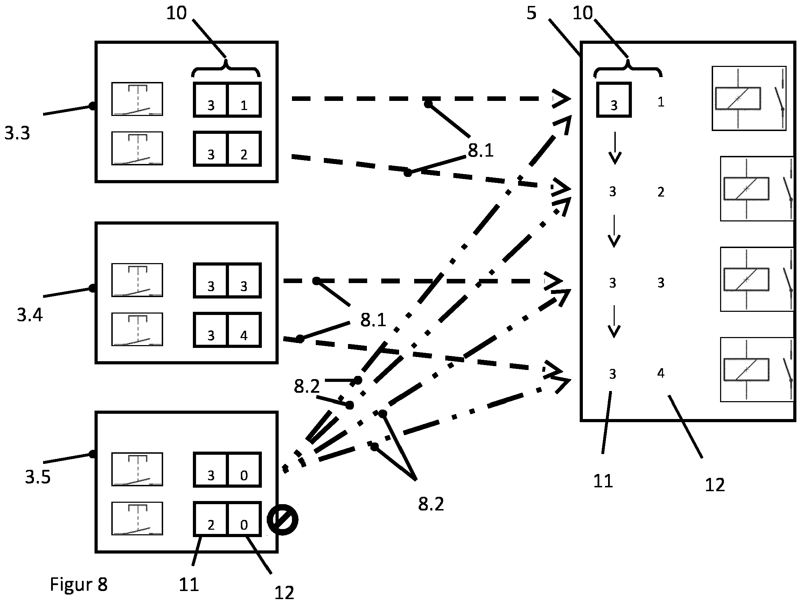

Figur 8 zeigt im Wesentlichen die gleiche Anordnung bzw. Konfiguration wie Figur 7. Gegenüber der Anordnung nach Figur 7 sind in der Anordnung nach Figur 8 jedoch die Verbindungsnummern 10 des Schaltsensors 3.4 angepasst, so dass virtuelle Verbindungsleitungen 8.1 zwischen dem Schaltsensor 3.4 und dem Schaltaktor 5 bestehen.

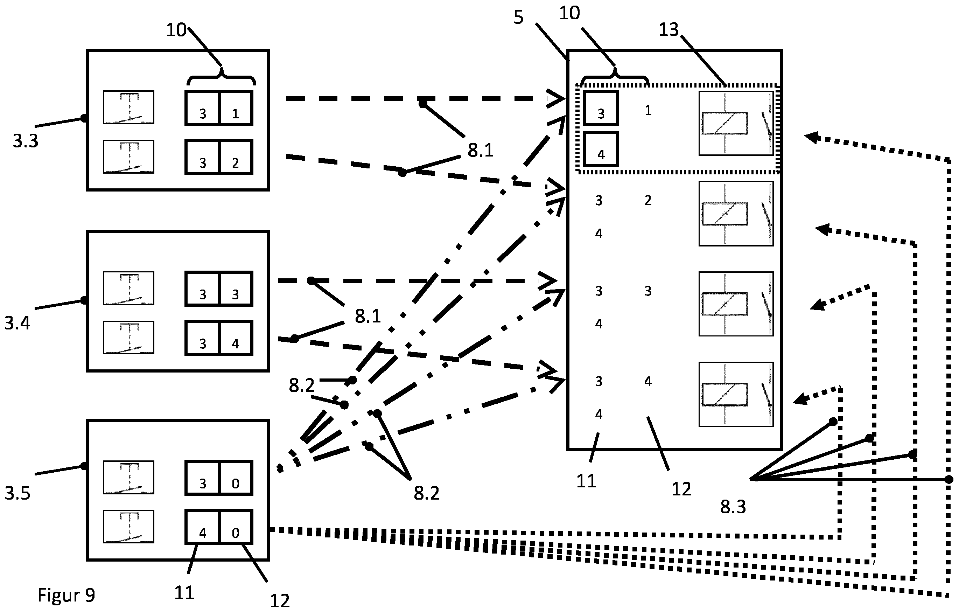

Figur 9 zeigt im Wesentlichen die gleiche Anordnung bzw. Konfiguration wie Figur 8. In der Anordnung gemäss Figur 9 sind jedoch zwei Gruppennummern 11 pro Aktorkanal 13 vorhanden.

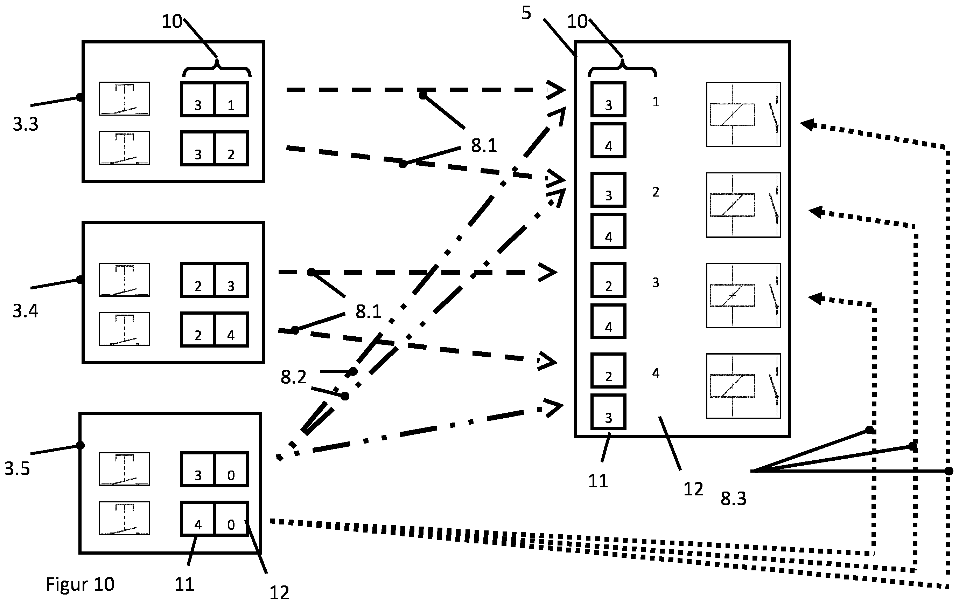

Figur 10 zeigt im Wesentlichen die gleiche Anordnung bzw. Konfiguration wie Figur 9. Im Gegensatz zur Anordnung gemäss Figur 9 sind jedoch gemäss der Anordnung nach Figur 10 alle Gruppennummern 11 des Aktors 5 frei wählbar, ähnlich wie in den Anordnungen nach den Figuren 3 bis 6.

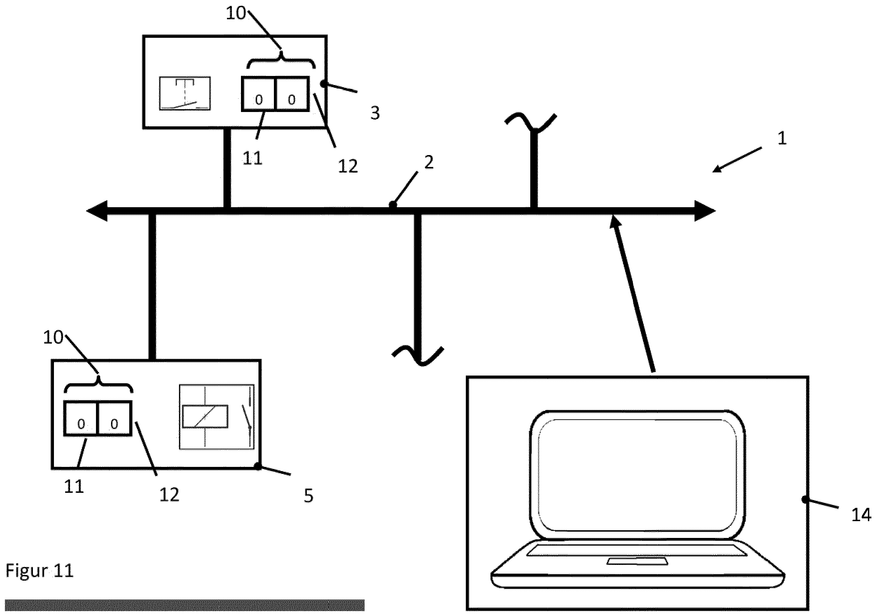

Figur 11 zeigt eine Ansicht nach den Figuren 1 und 2, wobei die Verbindungsnummern 10 von Sensor 3 und Aktor 5 auf "00" eingestellt sind und ein Laptop 14 mit ETS angeschlossen ist.

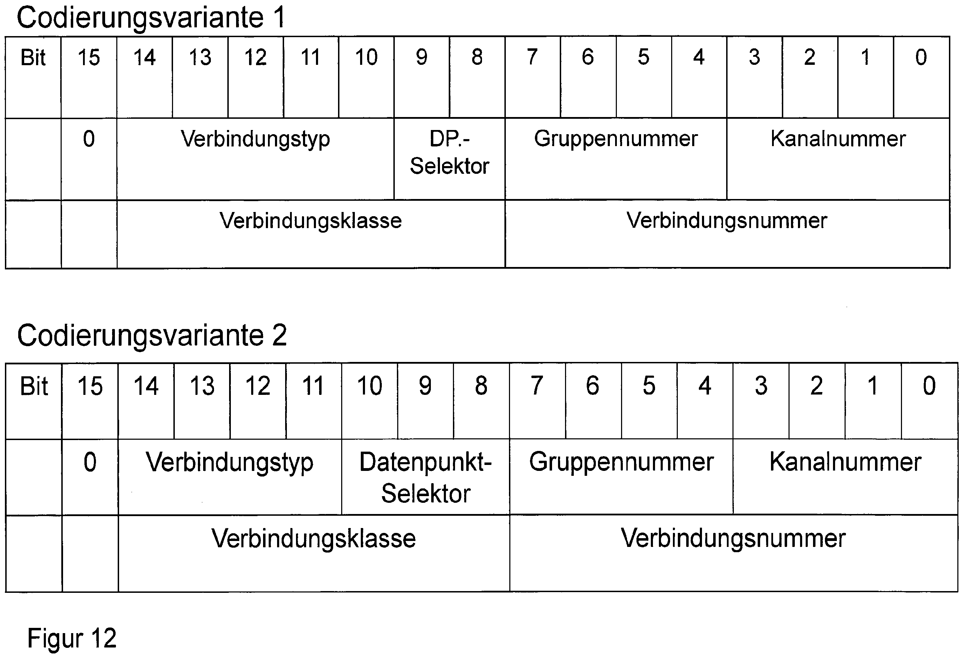

Figur 12 zeigt zwei Codierungsvarianten der Gruppenadresse. Beide Varianten unterscheiden sich nur in der Anzahl der Bits, die für den Verbindungstyp bzw. den Datenpunkt-Selektor codieren.

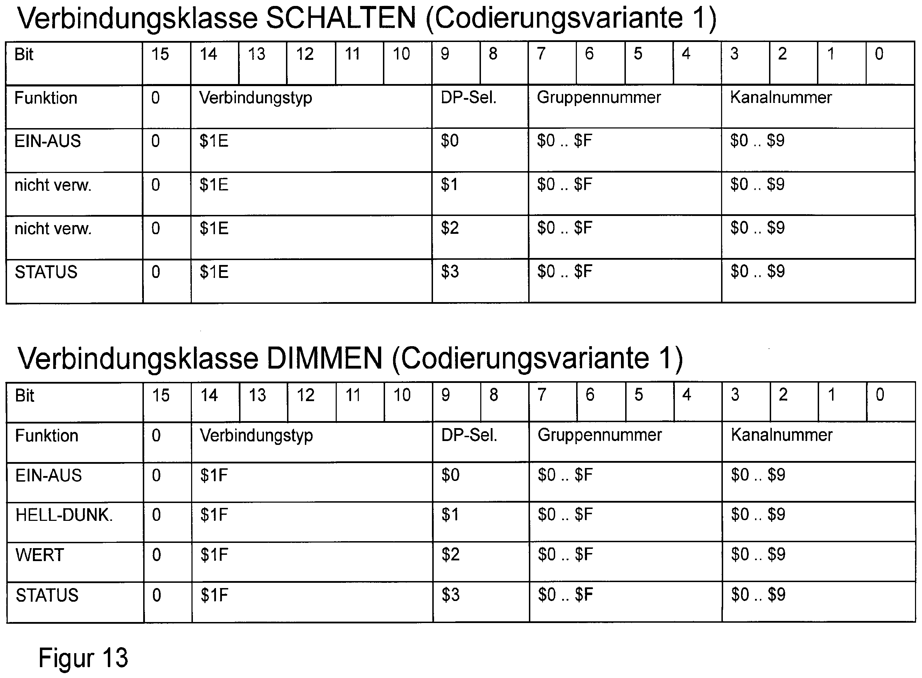

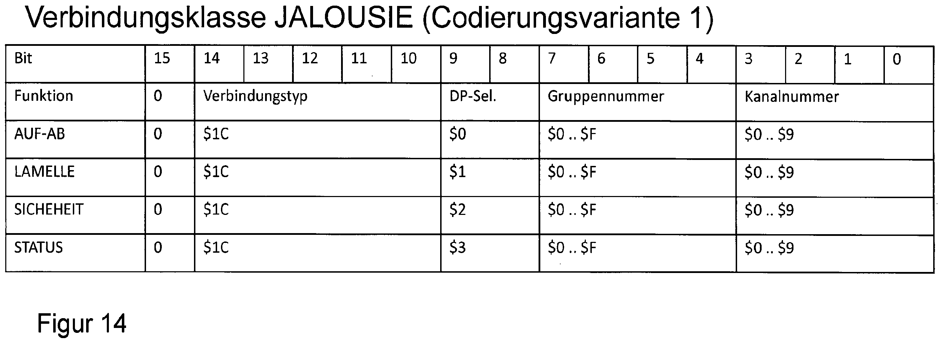

Die Figuren 13 und 14 zeigen konkrete Beispiele, wie die Codierung bei den Verbindungsklassen "Schalten", "Dimmen" und "Jalousie" implementiert sein kann.

Bezugnehmend auf die Figuren 1 - 14 erklärt sich die Funktionsweise der erfindungsgemässen Vorrichtung folgendermassen:
Die Busteilnehmer 3, 4, 5, 6, 7 können über einen KNX-Bus miteinander in Verbindung treten bzw. Daten austauschen. Sensoren, beispielsweise Schalt- bzw. Tastsensoren 3 oder Temperatursensoren 4 nehmen Befehle bzw. Informationen aus der Umwelt entgegen und speisen entsprechend der aufgenommenen Information Daten in den KNX-Bus 2 ein.

Den Busteilnehmern 3, 4, 5, 6, 7 sind Verbindungsklassen 9 zugeordnet, welche eine Kommunikation nur zwischen zueinander passenden Sensoren 3, 4 und Aktoren 5, 6, 7 ermöglicht. Der für viele Zwecke einzusetzende Schalt- bzw. Tastsensor 3.1 kann mit dem Schaltaktor 5 kommunizieren, weil beide über die gleiche Verbindungsklasse "Schalten" 9.1, 9.3 verfügen. Der Schaltsensor 3.1 ist jedoch nicht geeignet, um mit dem Heizungsschaltaktor 7 der Verbindungsklasse "Heizen" 9.2, 9.5 in Verbindung zu treten. Diese Situation ist in Figur 1 dargestellt, wobei zwischen miteinander in Verbindung stehenden Sensoren 3.1, 4 und Aktoren 5, 6, 7 virtuelle Verbindungskanäle 8 angedeutet sind. In Figur 1 zwar nicht eingezeichnet aber realisierbar wäre eine Verbindung zwischen dem Schaltsensor 3.1 und dem Lampenschaltaktor 6, da der Lampenschaltaktor 6 ebenfalls über eine ähnliche und daher kompatible Verbindungsklasse, die Verbindungsklasse "Lampe Schalten" 9.4 verfügt.

Wie aus Figur 2 ersichtlich wird sind Verbindungsklassen alleine nicht ausreichend, um die KNX-Busteilnehmer 3.1, 3.2, 4, 5 optimal miteinander zu vernetzen. Um Sensoren und Aktoren zielgerichtet miteinander zu vernetzen verfügen die KNX-Busteilnehmer über nicht dargestellte programmierbare Codierschalter. Ein Programmieren der Codierschalter erfolgt durch Einstellung einer Verbindungsnummer 10. Stimmen sowohl Verbindungsklasse 9.1, 9.3 als auch Verbindungsnummer 10 von Sensor 3.1 und Aktor 5 überein, so kann der Aktor 5 vom Sensor 3.1 angesteuert werden bzw. dessen Befehle über den KNX-Bus 2 empfangen und ausführen. Trotz übereinstimmender Verbindungsklasse "Schalten" 9.1, 9.3 ist, wie aus Figur 2 deutlich hervorgeht, eine Kommunikation bei nicht übereinstimmender Verbindungsnummer zwischen Sensor 3.2 und Aktor 5 nicht möglich. Gleiches gilt für nicht übereinstimmende Verbindungsklasse zwischen Sensor 4 und Aktor 5 trotz gleicher Verbindungsnummer 10.

In den Figuren 3 bis 10 sind verschiedene Anordnungen bzw. Konfigurationen von drei Zweifach-Schaltsensoren 3.3, 3.4, 3.5 sowie einem Vierfach-Schaltaktor 5 dargestellt. Die in den Figuren 3 bis 10 gezeigten Anordnungen bzw. Konfigurationen unterscheiden sich zum einen hinsichtlich des Vorhandenseins programmierbarer Codierschalter und zum anderen hinsichtlich der Programmierung der Codierschalter.

Zunächst sei hervorgehoben, dass der Schaltaktor 5 jeder beliebigen schaltbaren Einrichtung zugeordnet sein kann. Die Schaltsensoren 3.3, 3.4, 3.5 sind gemäss einem Ausführungsbeispiel einfache Schalter wie beispielsweise Zweifach-Lichtschalter.

Sowohl für eine Einstellung der Gruppennummer 11 als auch für die Einstellung der Kanalnummer 12 ist jeweils ein nicht dargestellter Codierschalter im Busteilnehmer nötig. Es können auch Busteilnehmer Verwendung finden, welche an Stelle eines Codierschalters zur Auswahl der Gruppennummer 11 und/oder Kanalnummer 12 über eine voreingestellte Gruppennummer 11 und/oder Kanalnummer 12 verfügen. Da Busteilnehmer mit programmierbaren Codierschaltern teurer und in der Handhabung komplizierter als bezüglich der Verbindungsnummer 10 voreingestellte Busteilnehmer sind, kann es vorteilhaft sein, nicht sämtliche Busteilnehmer eines Bussystems mit Codierschaltern auszustatten. Jedoch nimmt mit der Anzahl der Codierschalter auch eine einem Benutzer zur Verfügung stehende Flexibilität in der Ausgestaltung des Bussystems ab.

Figur 3 zeigt eine einfache Anordnung bzw. Konfiguration, gemäss der die Schaltsensoren 3.3, 3.4 jeweils über zwei virtuelle Verbindungskanäle 8 über den nicht gezeigten Bus mit dem Schaltaktor 5 in Verbindung stehen. Für die in Figur 3 dargestellten vier virtuellen Verbindungskanäle 8 sind zwanzig programmierbare Codierschalter nötig.

Wie in Figur 4 gezeigt ist, können über die nicht gezeigten Codierschalter die Verbindungsnummern des Schaltsensors 3.5 eingestellt werden, um weitere virtuelle Verbindungskanäle 8.2 zum Schaltaktor 5 aufzubauen. Wie in Figur 4 dargestellt sind auch Gruppenverbindungen möglich, bei denen zwischen einem Sensorkanal 15 des Sensors 3.5 und mehreren Aktorkanälen 13 des Aktors 5 virtuelle Verbindungen 8.2 bestehen. Eine solche Gruppenverbindung wird ermöglicht, indem die Kanalnummer 12 "0" zur Anwendung kommt. Wie aus Figur 4 ersichtlich führt die Wahl der Kanalnummer 12 "0" dazu, dass die Gruppennummer 11 die entstehenden virtuellen Verbindungskanäle 8.2 vorgibt. Somit kann eine Auswahl an Aktorkanälen 13 sowohl gezielt einzeln als auch über Gruppenverbindungen angesteuert werden. Figur 5 zeigt, wie die Anzahl an Codierschaltern im Aktor 5 reduziert werden kann. Im Vergleich zu Figur 4 kommt ein Vierfachaktor zur Anwendung, bei welchem nur die Gruppennummer 11 flexibel über nicht gezeigte Codierschalter einstellbar ist, während die Kanalnummer 12 vorgegeben ist. Wie in Figur 6 dargestellt kann ein Verlust von virtuellen Verbindungen vermieden werden, wenn die Verbindungsnummern 10 der Sensoren 3.3, 3.4, 3.5 über die vorhandenen Codierschalter an den nun bezüglich der Kanalnummern 12 unflexiblen Aktor 5 angepasst werden.

Gegenüber der Anordnung gemäss Figur 4 wurden in der Anordnung gemäss Figur 6 vier Codierschalter im Aktor 5 eingespart ohne auf virtuelle Verbindungen 8.1, 8.2 verzichten zu müssen. Die Anpassung der mittels Codierschaltern einstellbaren Sensoren 3.3, 3.4, 3.5 auf den Aktor 5 kann hierbei ohne Aufwand erfolgen, alle Vorteile wie Gruppenverbindungen bleiben erhalten.

Wie aus den Figuren 7 und 8 ersichtlich wird führt der Wegfall von drei weiteren Codierschaltern im Aktor 5 nur zum Wegfall einer Gruppenverbindung, wenn die Verbindungsnummern 10 der Sensoren 3.3, 3.4, 3.5 auf die Verbindungsnummern des Aktors 5 angepasst werden. Die Einstellung einer einzigen Gruppennummer 11 im Aktor 5 führt zur Gleichschaltung aller vier vorhandenen Gruppennummern 11. Die vier Gruppennummern 11 in Aktor 5 sind somit noch immer einstellbar, wobei eine Einstellung für alle vier Gruppennummern 11 nur gemeinsam vorgenommen werden kann. Durch diese Anordnung bzw. Konfiguration können weitere drei Codierschalter gegenüber der Anordnung bzw. Konfiguration gemäss Figur 6 eingespart werden.

Aus Figur 9 geht hervor, wie es durch eine zusätzliche Gruppennummer 11 und einem zusätzlichen Codierschalter pro Aktorkanal 13 gegenüber der in Figur 8 gezeigten Anordnung möglich ist, eine Zentral-Aus-Funktion vorzusehen. Hierzu dient die zweite Gruppenverbindung ausgehend von Sensor 3.5, in Figur 9 mit der Verbindungsnummer "40".

Figur 10 zeigt im Vergleich zu Figur 9, wie durch Verwendung von Codierschaltern zur Einstellung aller acht Gruppennummern 11 des Aktors 5 bewirkt werden kann, dass Gruppenverbindungen im Gegensatz zur Anordnung gemäss den Figuren 8 und 9 nicht stets auf den ganzen Aktor 5 bezogen sind. Vorteilhaft ist hierbei die hohe Flexibilität, wobei zugleich nur so viele Codierschalter nötig sind, wie in der Anordnung gemäss Figur 3.

Wie in Figur 11 schematisch dargestellt ist es möglich, mit Codierschaltern ausgestattete Bus-Teilnehmer 3, 5 mittels der ETS-Software zur Programmierung von KNX-Bus-Systemen zu programmieren, sofern die Gruppennummer 11 und die Kanalnummer 12 auf "0" gestellt ist. Ein Benutzer oder Installateur kann somit nach Belieben eine Installation, Inbetriebnahme, Programmierung und Anpassung des KNX-Bus-Systems und seiner angeschlossenen Teilnehmer vornehmen, da er zwischen einer manuellen Programmierung der Teilnehmer und der Programmierung mittels der ETS-Software frei wählen kann.

Wie in Figur 12 ersichtlich besteht eine KNX-Gruppenadresse standardmässig aus 15 Bit, wobei zwar 16 Bit verwendet werden, das höchstwertige Bit - hier das Bit 15 - aber stets "0" ist müssen auch die Codierungsvarianten gemäss der vorliegenden Erfindung mit den zur Verfügung stehenden 15 Bit codiert werden. Bei der Codierungsvariante 1 sind 32 Verbindungstypen mit bis zu 4 Datenpunkten codierbar, da die 5 bits des Verbindungstyps 2^5 = 32 Kombinationen erlauben und die 2 bits des Datenpunktselektors 2^2 = 4 Kombinationen erlauben. Selbstverständlich können statt 15-Bit-Gruppenadressen auch 16-Bit-Gruppenadressen verwendet werden.

Entsprechend sind bei der Codierungsvariante 2 dann 2^4 = 16 Verbindungstypen und 2^3 = 8 Datenpunkte möglich bzw. codierbar.

Die 4 bit von Gruppen- und Kanalnummer sind passend für handelsübliche Codierschalter.

Selbstverständlich können abweichend von den Codierungsvarianten 1 und 2 noch andere Codierungsvarianten realisiert werden. Diese können auch gemeinsam an ein Bus-System angeschlossen sein. Voraussetzung ist lediglich, dass die sich ergebenden Gruppenadressen sich nicht überschneiden bzw. es keine Redundanz gibt.

Wie in den Figuren 13 und 14 dargestellt, können Gruppenadressen für die Verbindungsklassen Schalten, Dimmen und Jalousie auf einfache Weise mit der Codierungsvariante 1 realisiert werden.

Das in den Figuren 12 bis 14 dargestellte Codierschalter-Verbindungsmodell, bei dem die Gruppenadresse aus Verbindungsklasse und Verbindungsnummer besteht, kann somit auf einfache Weise auf das bekannte KNX-Verbindungsmodell übertragen werden. Hierzu dienen (nicht dargestellte) vorgefertigte und mittels der Codierschalter auswählbare Tabellen, welche im KNX-Gerät bereits abgelegt sind oder zumindest angelegt sind und berechnet werden können.

**Bezugszeichenliste**

| | | | | | |
|---|---|---|---|---|---|
| 1 | KNX-Bus mit Bus-Teilnehmern | 34 | | 67 | |
| 2 | KNX-Bus | 35 | | 68 | |
| 3 | Schalt/Tast-Sensor | 36 | | 69 | |
| 4 | Temperatursensor | 37 | | 70 | |
| 5 | Schaltaktor | 38 | | 71 | |
| 6 | Lampenschaltaktor | 39 | | 72 | |
| 7 | Heizungsschaltaktor | 40 | | 73 | |
| 8 | Virtueller Verbindungskanal | 41 | | 74 | |
| 9 | Verbindungsklasse | 42 | | 75 | |
| 10 | Verbindunqsnummer | 43 | | 76 | |
| 11 | Gruppennummer | 44 | | 77 | |
| 12 | Kanalnummer | 45 | | 78 | |
| 13 | Aktorkanal | 46 | | 79 | |
| 14 | Laptop mit ETS | 47 | | | |
| 15 | Sensorkanal | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Busteilnehmer (3.1, 3.2, 3.3, 3.4, 3.5 4, 5, 6, 7) für ein KNX-Bus-System (1), umfassend einen Codierschalter zur Programmierung des Busteilnehmers (3.1, 3.2, 3.3, 3.4, 3.5 4, 5, 6, 7), wobei der Codierschalter in eine bestimmte Position bringbar ist, in welcher eine Programmierung des Busteilnehmers (3.1, 3.2, 3.3, 3.4, 3.5 4, 5, 6, 7) mittels einer Software erfolgen kann, wobei
mittels des Codierschalters die Verbindungsnummer des Busteilnehmers (3.1, 3.2, 3.3, 3.4, 3.5 4, 5, 6, 7) einstellbar ist, wobei ein Busteilnehmer (3.1, 3.2, 3.3, 3.4, 3.5 4, 5, 6, 7), beispielsweise ein Sensor und ein korrespondierender Aktor kommunizieren , wenn ihre Verbindungsnummern übereinstimmen **dadurch gekennzeichnet, dass** einerseits eine Einstellung bzw. Position des Codierschalters wählbar ist, welche die Programmierung des Teilnehmers bzw. die Einstellung der Verbindungsnummer mittels einer Engineering Tool Software, ETS, zulässt und andererseits zumindest eine weitere Einstellung des Codierschalters wählbar ist, wobei die Verbindungsnummer direkt durch die Einstellung des Codierschalters vorgegeben ist, wobei
ein virtueller Verbindungskanal, über welchen zumindest zwei Busteilnehmer(3.1, 3.2, 3.3, 3.4, 3.5 4, 5, 6, 7) über den Bus verbunden sind eine solche Verbindung derart charakterisiert ist, dass die Busteilnehmer (3.1, 3.2, 3.3, 3.4, 3.5 4, 5, 6, 7) bezüglich einer Verbindungsklasse und einer Verbindungsnummer übereinstimmen, wobei die Verbindungsklasse und die Verbindungsnummer zusammengefasst sind und Gruppenadressen bilden, wobei, zwei Busteilnehmer (3.1, 3.2, 3.3, 3.4, 3.5 4, 5, 6, 7) in Verbindung treten, wenn ihre Gruppenadressen übereinstimmen, wobei die Verbindungsnummer hierbei eine Gruppennummer und eine Kanalnummer umfasst und somit zumindest zweistellig ist.

2. Busteilnehmer (3.1, 3.2, 3.3, 3.4, 3.5 4, 5, 6, 7) gemäss Anspruch 1, **dadurch gekennzeichnet, dass** mittels des Codierschalters eine Gruppennummer (11) oder eine Kanalnummer (12) auswählbar ist.

3. Busteilnehmer (3.1, 3.2, 3.3, 3.4, 3.5 4, 5, 6, 7) gemäss einem der Ansprüche 1 oder 2, **dadurch gekennzeichnet, dass** der Codierschalter ein Hexadezimal- oder ein Dezimal-Codierschalter ist.

4. Busteilnehmer (3.1, 3.2, 3.3, 3.4, 3.5 4, 5, 6, 7) gemäss zumindest einem der vorhergehenden Ansprüche, **dadurch gekennzeichnet, dass** der Codierschalter manuell bedienbar ist.

## Claims

1. Bus subscriber (3.1, 3.2, 3.3, 3.4, 3.5, 4, 5, 6, 7) for a KNX bus system (1), comprising a coding switch for programming the bus subscriber (3.1, 3.2, 3.3, 3.4, 3.5, 4, 5, 6, 7), wherein the coding switch can be brought into a particular position in which the bus subscriber (3.1, 3.2, 3.3, 3.4, 3.5, 4, 5, 6, 7) can be programmed by means of software, wherein the connection number of the bus subscriber (3.1, 3.2, 3.3, 3.4, 3.5, 4, 5, 6, 7) can be set by means of the coding switch, wherein a bus subscriber (3.1, 3.2, 3.3, 3.4, 3.5, 4, 5, 6, 7), for example a sensor and a corresponding actuator, communicate when their connection numbers match, **characterized in that** on the one hand a setting or position of the coding switch can be selected which allows programming of the subscriber and/or setting of the connection number by means of Engineering Tool Software ETS, and on the other hand at least one further setting of the coding switch can be selected, wherein the connection number is directly predefined by the setting of the coding switch, wherein a virtual connection channel, over which at least two bus subscribers (3.1, 3.2, 3.3, 3.4, 3.5, 4, 5, 6, 7) are connected via the bus, such a connection is **characterized in that** the bus subscribers (3.1, 3.2, 3.3, 3.4, 3.5, 4, 5, 6, 7) match in terms of a connection class and a connection number, wherein the connection class and the connection number are combined and form group addresses, wherein two bus subscribers (3.1, 3.2, 3.3, 3.4, 3.5, 4, 5, 6, 7) enter into communication when their group addresses match, wherein the connection number in this case comprises a group number and a channel number and thus has at least two digits.

2. Bus subscriber (3.1, 3.2, 3.3, 3.4, 3.5, 4, 5, 6, 7) according to claim 1, **characterized in that** a group number (11) or a channel number (12) can be selected by means of the coding switch.

3. Bus subscriber (3.1, 3.2, 3.3, 3.4, 3.5, 4, 5, 6, 7) according to one of claims 1 or 2, **characterized in that** the coding switch is a hexadecimal coding switch or a decimal coding switch.

4. Bus subscriber (3.1, 3.2, 3.3, 3.4, 3.5, 4, 5, 6, 7) according to at least one of the preceding claims, **characterized in that** the coding switch is manually operable.

## Revendications

1. Participant à un bus (3.1, 3.2, 3.3, 3.4, 3.5, 4, 5, 6, 7) pour un système de bus KNX (1) comportant un commutateur de codage pour la programmation du participant au bus (3.1, 3.2, 3.3, 3.4, 3.5, 4, 5, 6, 7),
dans lequel le commutateur de codage peut être amené dans une position déterminée dans laquelle peut avoir lieu une programmation du participant au bus (3.1, 3.2, 3.3, 3.4, 3.5, 4, 5, 6, 7) à l'aide d'un logiciel 10,
dans lequel à l'aide du commutateur de codage peut être réglé le numéro de connexion du participant au bus (3.1, 3.2, 3.3, 3.4, 3.5, 4, 5, 6, 7), où un participant au bus (3.1, 3.2, 3.3, 3.4, 3.5, 4, 5, 6, 7), par exemple un capteur et un actionneur correspondant communiquent lorsque leurs numéros de connexion coïncident,
**caractérisé par le fait que**
d'une part, peut être sélectionné un réglage ou une position du commutateur de codage qui permet la programmation du participant ou le réglage du numéro de connexion à l'aide d'un Logiciel d'Outil d'Ingénierie, ETS et, d'autre part, peut être sélectionné au moins un autre réglage du commutateur de codage, où le numéro de connexion est prédéterminé directement par le réglage du commutateur de codage,
dans lequel un canal de connexion virtuel par lequel au moins deux participants au bus (3.1, 3.2, 3.3, 3.4, 3.5, 4, 5, 6, 7) sont connectés via le bus, une telle connexion est **caractérisée** de sorte que les participants au bus (3.1, 3.2, 3.3, 3.4, 3.5, 4, 5, 6, 7) coïncident en ce qui concerne une classe de connexion et un numéro de connexion, où la classe de connexion et le numéro de connexion sont regroupés et forment des adresses de groupe, où deux participants au bus (3.1, 3.2, 3.3, 3.4, 3.5, 4, 5, 6, 7) entrent en communication lorsque leurs adresses de groupe coïncident, où le numéro de connexion comporte alors un numéro de groupe et un numéro de canal et est donc au moins de deux chiffres.

2. Participant au bus (3.1, 3.2, 3.3, 3.4, 3.5, 4, 5, 6, 7) selon la revendication 1, **caractérisé par le fait qu'**à l'aide du commutateur de codage peut être sélectionné un numéro de groupe (11) ou un numéro de canal (12).

3. Participant au bus (3.1, 3.2, 3.3, 3.4, 3.5, 4, 5, 5, 6, 7) selon l'une des revendications 1 ou 2, **caractérisé par le fait que** le commutateur de codage est un commutateur de codage hexadécimal ou un commutateur de codage décimal.

4. Participant au bus (3.1, 3.2, 3.3, 3.4, 3.5, 4, 5, 6, 7) selon au moins l'une des revendications précédentes, **caractérisé par le fait que** le commutateur de codage peut être actionné manuellement.
